(19) Europäisches Patentamt
European Patent Office
Office européen des brevets

(11) Veröffentlichungsnummer: **0 099 537**
**B1**

(12) **EUROPÄISCHE PATENTSCHRIFT**

(45) Veröffentlichungstag der Patentschrift: **05.11.86**

(21) Anmeldenummer: **83106786.3**

(22) Anmeldetag: **11.07.83**

(51) Int. Cl.⁴: **C 08 G 18/10**, C 08 G 18/50, C 08 G 18/42, C 08 G 18/83, C 08 G 18/46

(54) **Einstufenverfahren zur Herstellung von Polyaminen aus NCO-Prepolymeren.**

(30) Priorität: **21.07.82 DE 3227219**

(43) Veröffentlichungstag der Anmeldung: **01.02.84 Patentblatt 84/5**

(45) Bekanntmachung des Hinweises auf die Patenterteilung: **05.11.86 Patentblatt 86/45**

(84) Benannte Vertragsstaaten: **BE CH DE FR GB IT LI NL**

(56) Entgegenhaltungen: **EP-A-0 071 834**

**Patent Abstracts of Japan Band 3, Nr. 152, 14. Dezember 1979, Seite 122C67**
**Patent Abstracts of Japan Band 3, Nr. 138, 16. November 1979, Seite 124C64**

(73) Patentinhaber: **BAYER AG, Konzernverwaltung RP Patentabteilung, D-5090 Leverkusen 1 Bayerwerk (DE)**

(72) Erfinder: **Rasshofer, Werner, Dr., Wolfskaul 10, D-5000 Köln 80 (DE)**

EP 0 099 537 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein verbessertes Einstufenverfahren zur Herstellung von Polyaminen mit aromatischen und/oder aliphatischen primären Aminogruppen, vorzugsweise aromatischen Aminogruppen, durch Hydrolyse von endständige Isocyanatgruppen aufweisenden Verbindungen mit einem NCO-Gehalt von 0,5 bis 40 Gew.-% mit äquivalenten oder überschüssigen Mengen Wasser in Gegenwart von sowohl in Wasser als auch in allen gängigen organischen Lösungsmitteln unlöslichen, anorganischen oder organischen basischen Katalysatoren wie z.B. basischem Aluminiumoxid oder basischen Ionenaustauschern, in Gegenwart von wasserlöslichen Lösungsmitteln wie Dioxan oder Dimethylformamid bei vorzugsweise erhöhten Reaktionstemperaturen. Als Isocyanatgruppen aufweisende Verbindungen werden modifizierte Isocyanate oder NCO-Prepolymere bzw. Semiprepolymere eingesetzt.

Es ist bekannt, daß aromatische Isocyanate durch saure Hydrolyse in primäre aromatische Amine überführt werden können. Die Reaktion verläuft allerdings nur sehr unvollständig, da das bei der Hydrolyse gebildete Amin mit noch nicht umgesetztem Isocyanat zum entsprechenden Harnstoff weiterreagiert. Diese Folgereaktion läßt sich auch durch Anwendung überschüssiger starker Mineralsäure nicht unterdrücken. Ein neueres Beispiel dieser Verfahrensweise findet sich in der JP-PS 55 007-827.

In der DE-B 1 270 046 wird ein Verfahren zur Herstellung definierter, Polyalkylenglykolether-Segmente enthaltender, primärer aromatischer Amine beschrieben, bei dem man Umsetzungsprodukte von aromatischen Di- oder Triisocyanaten mit Polyalkylenglykolethern und/oder Polyalkylenglykolthioethern, vorzugsweise solchen mit Molekulargewichten zwischen 400 und 4000, mit sekundären oder tertiären Carbinolen umsetzt und anschließend (gegebenenfalls in Gegenwart saurer Katalysatoren) in einem inerten Lösungsmittel einer thermischen Spaltung bei hohen Temperaturen unterwirft. Nachteilig ist dabei neben der hohen Spalttemperatur, daß im Verlauf der thermischen Spaltung der Urethane brennbare, leicht flüchtige Alkene entstehen, die im Gemisch mit Luft explosiv sind, so daß entsprechende Vorsichtsmaßnahmen getroffen werden müssen.

Gegenstand der DE-B 1 694 152 ist die Herstellung von mindestens 2 endständige Aminogruppen aufweisenden Prepolymeren durch Umsetzung von Hydrazin, Aminophenylethylamin oder anderen Diaminen mit einem NCO-Prepolymer aus einem Polyetherpolyol und Polyisocyanat (NCO:NH-Verhältnis = 1:1,5 bis 1:5). Nicht umgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner auftritt.

Eine andere Synthesemöglichkeit für Urethangruppen aufweisende Polyamine wird in der FR-PS 1 415 317 beschrieben. Urethangruppenhaltige NCO-Prepolymere werden mit Ameisensäure in die N-Formylderivate überführt, die zu endständigen aromatischen Aminen verseift werden. Auch die Reaktion von NCO-prepolymeren mit Sulfaminsäure gemäß DE-B 1 155 907 führt zu Verbindungen mit endständigen Aminogruppen. Desweiteren werden höhermolekulare, aliphatische, sekundäre und primäre Aminogruppen aufweisende Voraddukte nach DE-B 1 215 373 durch Umsetzung höhermolekularer Hydroxylverbindungen mit Ammoniak in Gegenwart von Katalysatoren unter Druck bei hohen Temperaturen erhalten oder sind gemäß US-PS 3 044 989 durch Umsetzung höhermolekularer Polyhydroxylverbindungen mit Acrylnitril unter anschließender katalytischer Hydrierung zugänglich. Auch durch Umsetzung von NCO-Prepolymeren mit Hydroxylgruppen aufweisenden Enaminen, Aldiminen oder Ketiminen und anschließende Hydrolyse erhält man gemäß DE-A 2 546 536 bzw. US-PS 3 865 791 höhermolekulare, endständige Aminogruppen und Urethangruppen aufweisende Verbindungen. Eine weitere Synthesemöglichkeit für Urethan- und Ethergruppen aufweisende aromatische Polyamine liegt in der bei der Reaktion von Isatosäureanhydrid und Diolen eintretenden Ringöffnung. Solche Polyamine sind z.B. beschrieben in der US-PS 4 180 644 und den DE-A 2 019 432, 2 619 840, 2 648 774 und 2 648 825. Nachteilig für viele Zwecke ist die geringe Reaktivität der solcherart erhaltenen, aromatischen Esteramine.

Auch die Reaktion von Nitroarylisocyanaten mit Polyolen und nachfolgender Reduktion der Nitrogruppen zu aromatischen Amingruppen ist bekannt (US-PS 2 888 439).

Nachteilig sind hier vor allem die hohen Kosten des Reduktionsschrittes.

Es ist auch bekannt, daß gewisse heteroaromatische Isocyansäureester durch basische Hydrolyse in heteroaromatische Amine überführt werden können. Die bei H. John, J. Prakt. Chemie 130, 314 f bzw. 332 f (1931) für zwei ganz bestimmte, heteroaromatische Monoisocyansäureester genannten Hydrolysebedingungen sind aber für die Überführung von Poly-NCO-Verbindungen in aliphatische und/ oder aromatische Amine nicht nur völlig ungeeignet, sondern darüber hinaus auch gefährlich.

Gegenstand eigener Vorschläge nach den DE-A 29 48 419 und 30 39 600 sind mehrstufige Verfahren zur Herstellung von Polyaminen durch alkalische Hydrolyse von NCO-Voraddukten mittels überschüssiger wäßriger Alkalihydroxide bei niedrigen Temperaturen zu Carbamaten, Ansäuern mit der Basenmenge äquivalenten oder mit über die Basenmenge hinaus überschüssigen Mengen an Mineralsäuren oder Ionenaustauscherharzen unter $CO_2$-Entwicklung, gegebenenfalls Neutralisation überschüssiger Säuremengen mittels Basen und anschließende Isolierung der Polyamine.

Die hier beschriebenen Verfahren zur Herstellung von Polyaminen sind alle aufwendig. Selbst bei dem zuletztgenannten, bereits einfacheren Verfahren zur Umwandlung von Polyisocyanaten in Polyamine wäre noch eine weitere entscheidende Vereinfachung wünschenswert, um zu Polyaminen in wirtschaftlich noch günstigerer Weise zu gelangen. Ein wesentlicher Vorteil wäre dabei in einem Einstufenverfahren gegenüber

den bisherigen Mehrstufenverfahren zu sehen, ferner im Wegfall gebildeter Salze und der weitgehenden Vermeidung eines Filtrationsschrittes von gebildeten, zumeist schwer filtrierbar feinteiligen Salzen.

Bisher blieben alle Versuche erfolglos, in befriedigenden Ausbeuten Polyamine durch direkte Verseifung von Polyisocyanaten in einem Einstufenverfahren zu erhalten. Statt der gewünschten Verseifungsprodukte werden nur Harnstoffgruppen aufweisende, kaum mehr fließfähige, teilweise inhomogene Produkte erhalten, welche entweder praktisch gar keine oder nur wenig Aminogruppen aufweisen (s. auch Vergleichsbeispiele). Der Grund könnte darin bestehen, daß die Isocyanat-Amin-Reaktion wesentlich schneller ist als die Isocyanat-Wasser-Reaktion. Aus diesem Grunde wurden die Hydrolysereaktionen mittels Alkalihydroxidkatalyse bisher bei möglichst tiefen Temperaturen durchgeführt und die zwangsläufig intermediär entstehenden Alkalicarbamate nachträglich durch Säure zersetzt.

Völlig überraschend wurde nun gefunden, daß die einstufige Hydrolyse von Polyisocyanaten doch direkt zu Polyaminen führt, wenn in Gegenwart von sowohl relativ schwach bis auch stark basischen, jedoch sowohl in Wasser als auch in allen gängigen organischen Lösungsmitteln unlöslichen, anorganischen oder organischen Katalysatoren wie z.B. basischem Aluminiumoxid oder basischen Ionenaustauscherharzen, und in Gegenwart von wasserlöslichen Lösungsmitteln wie z.B. Dioxan, Tetrahydrofuran, Dimethylformamid oder Acetonitril gearbeitet wird, wobei man bei auch möglichst erhöhten Temperaturen arbeiten muß, z.B. bei 50 bis 165°C, bevorzugt 80 - 130°C, bzw. den Siedepunkten des Lösemittel-Wassergemisches, um die Harnstoffbildung zu unterdrücken. Bei niedrigeren Temperaturen, z.B. Raumtemperatur, entstehen mit den Oxiden und anderen erfindungsgemäß verwendbaren unlöslichen Verbindungen überraschend mehr Harnstoffgruppierungen als bei den hohen Temperaturen. Es war sehr unerwartet, daß die Harnstoffbildung unter den erfindungsgemäßen Bedingungen der höheren Temperaturen weitestgehend unterdrückt wird, da bei diesen höheren Temperaturen im Falle der vorveröffentlichten Alkalihydroxidkatalyse (lösliche Katalysatoren) diese zu einem starken Anstieg der Harnstoffbildung führt.

Entsprechend dem erfindungsgemäßen Verfahren werden wasserlösliche Lösungsmittel eingesetzt, um eine im wesentlichen homogene Lösung der Reaktionsteilnehmer NCO-Verbindung und Wasser zu erzielen. Besonders geeignete Lösungsmittel sind dabei Dimethylformamid, Dioxan, Dimethoxyethan, Aceton und Acetonitril.

Es ist aus der DE-AS 1 235 499 bekannt, Lösungen von NCO-Prepolymeren in Dimethylformamid mit etwa äquivalenten Mengen Wasser (80 bis 120 % der Theorie) unter Kettenverlängerung über Harnstoffgruppen in hochviskose Lösungen, welche zur Erspinnung von Elasthan-Fäden oder für Beschichtungen geeignet sind, zu überführen. Die hiervon unterschiedliche Reaktion der NCO-Verbindungen mit überschüssigen Mengen an Wasser unter Bildung Praktisch niedermolekularer Amine war überraschend.

Ferner ist bekannt, daß Isocyanate mit Dialkylformamiden bei erhöhten Temperaturen zu Formamidinen reagieren (H. Ulrich et al, J.Org. Chem. 33, 3928-3930 (1968)). Auch diese Reaktion stört nicht bei der glatten Hydrolysereaktion zu den Polyaminen nach dem erfindungsgemäßen Verfahren, wenn man Dialkylformamide als Lösungsmittel für die NCO-Prepolymeren verwendet.

Ein erheblicher Vorteil des Verfahrens wird darin gesehen, daß bei den erfindungsgemäßen Katalysatoren keine Salzbildung eintritt, wie dies mit Alkalihydroxiden beispielsweise der Fall ist; dort werden nämlich die Alkalicarbamate mit Säuren zu den Alkalisalzen dieser Säuren (und $CO_2$) umgesetzt.

So können die verwendeten Katalysatoren in einfachster Weise nach Abfiltrieren beliebig wiederverwendet werden. Die Entfernung der Katalysatoren kann dabei vorzugsweise leicht durch Abfiltrieren aus dem Reaktionsansatz oder den Polyaminen erfolgen. Aufwendige Destillationsvorgänge sind nicht erforderlich. Nebenprodukt der Hydrolysereaktion ist lediglich gasförmiges Kohlendioxid.

Das Verfahren mit den erfindungsgemäßen Katalysatoren ist auch besonders gut für die Hydrolyse von NCO-Prepolymeren auf Basis von Polyestern geeignet, da die schonenden Reaktionsbedingungen nicht zu einer Spaltung der Estergruppierung während der Hydrolysereaktion in nennenswertem Ausmaße führen. Die erfindungsgemäß zu verwendenden Katalysatoren stellen technisch leicht zugängliche, wohlfeile Katalysatoren dar, die gegebenenfalls nach Abtrennung wiederverwendet werden können. Diese Katalysatoren zeigen auch weniger oder praktisch keine chemische Wechselwirkung mit alkalisch hydrolysierbaren Lösungsmitteln wie Dimethylformamid. Bei Verwendung von stark basischen Alkalihydroxiden tritt dagegen eine deutliche Hydrolyse von z.B. Dimethylformamid ein.

Gegenstand der Erfindung ist somit ein Verfahren zur Herstellung von organische und/oder aliphatische Aminogruppen aufweisenden primären Polyaminen durch Hydrolyse von freie Isocyanatgruppen aufweisenden Verbindungen in einem Schritt durch Vermischung von

a) aromatische und/oder aliphatische, freie NCO-Gruppen aufweisenden Verbindungen mit einem NCO-Gehalt zwischen 0,5 und 40 Gew.-%, bevorzugt 1,2 - 25 Gew.-%, besonders bevorzugt 1,5 - 15 Gew.-%, gegebenenfalls gelöst in einem organischen, NCO-inerten, wassermischbaren Lösungsmittel,

b) Wasser,

c) einer Base als Katalysator,

d) einem Lösungsmittel,

und gegebenenfalls

e) 0,1 - 15 Gew.-%, bezogen auf a), mindestens einer, ein bis vier NCO:reaktive H-Atome aufweisende Gruppen enthaltenden Verbindung des Molekulargewichtsbereiches 32 - 2000,

dadurch gekennzeichnet, daß der basische Katalysator c) eine sowohl in Wasser als auch in allen gängigen organischen Lösungsmitteln im wesentlichen unlösliche, organische oder anorganische Verbindung ist.

Gegenstand der Erfindung ist ferner ein Verfahren zur Herstellung von aromatische und/oder aliphatische Aminogruppen aufweisenden primären Polyaminen durch Hydrolyse von freie Isocyanatgruppen aufweisenden Verbindungen in einem Schritt durch Vermischung bei unter 165°C, bevorzugt 80 - 130°C, von

a) NCO-Gruppen aufweisende Verbindungen, vorzugsweise mit aromatisch gebundenen NCO-Gruppen, mit einem Gehalt von 0,5 bis 40 Gew.-%, vorzugsweise 1,2 bis 25 Gew.-% und besonders bevorzugt 1,5 bis 15 Gew.-% NCO,

b) mit überschüssigen Mengen an Wasser von mindestens 2 Äquivalenten (entsprechend 1 Mol $H_2O$ pro Äquivalent NCO), vorzugsweise mehr als 10 Äquivalenten, Wasser pro Äquivalent NCO-Gruppe in a),

c) einer oder mehreren basischen Katalysatoren und

d) einem oder mehreren wassermischbaren, polaren Lösungsmitteln, bevorzugt mit Carbonsäuredialkylamid-, Lactam-, Tetraalkylharnstoff-, Sulfon-, Sulfoxid-, Phosphordialkylamid-, Nitril-, Keto- und Ether-Gruppen, besonders bevorzugt Carbonsäuredialkylamid-, Ether-, Keto- und Nitril-Gruppen, in Mengen von $\geqslant$ 10, vorzugsweise $\geqslant$ 20 Gew.-Teilen, besonders bevorzugt $\geqslant$ 40 Gew.-Teile d), bezogen auf 100 Teile a),

dadurch gekennzeichnet, daß der oder die basischen Katalysatoren c) sowohl in Wasser als auch in allen gängigen Lösungsmitteln in wesentlichen unlösliche, organische oder anorganische Verbindungen sind und in Mengen von z.B. 1-200 g, bevorzugt 2 - 50 g und besonders bevorzugt 5 - 30 g Katalysator pro Mol NCO aus a) eingesetzt werden.

Bei dem Verfahren werden besonders bevorzugt pro 60 Teile a) mindestens 40 Teile b) bis e) eingesetzt und eine homogene Reaktionsphase in der Mischung von a), b), d), e) bei den gewählten Reaktionstemperaturen aufrechterhalten. Der basische Katalysator c) liegt in der Reaktionsphase heterogen vor.

Durch die erfindungsgemäße Verwendung der unlöslichen, basischen Katalysatoren c) können Nachteile vermieden werden, wie sie bei der Verwendung von flüssigen und flüchtigen tertiären Aminen oder, zumindest teilweise, wasserlöslichen, kristallinen basischen Verbindungen als Katalysatoren auftreten, wenn kontinuierlich gearbeitet werden soll. Werden z.B. t-Amine verwendet, so müssen aufwendige Kondensationsvorkehrungen zum vollständigen Rückerhalt getroffen oder ein gewisser, jeweils auszugleichender Verlust, in Kauf genommen werden. Außerdem treten dort leicht Verfärbungen ein.

Bei z.T. löslichen Katalysatoren, wie es z.B. Kaliumhydrogencarbonat oder Natriumacetat sind, treten oft ungelöste und gelöste Anteile an Katalysator auf, so daß unter ungünstigen Umständen der basische Katalysator zweimal abfiltriert werden muß und möglicherweise geringe Katalysatorrückstände im aminischen Endprodukt verbleiben, was normalerweise unerwünscht ist.

Ebenfalls Gegenstand der Erfindung ist gegebenenfalls die Mitverwendung untergeordneter Mengen von 0,1 bis 15 Gew.-% einer Verbindung e) mit einer, zwei oder mehreren, an aliphatische, cycloaliphatische oder aromatische Reste gebundenen Hydroxy- und/oder Amino- und/ oder Thiolgruppen bei der Hydrolysereaktion. Die Mitverwendung dieser H-aktive Gruppen enthaltende Ver-Vorteilen: Aus niedermolekulare Polyisocyanate enthaltenden NCO-Verbindungen, z.B. NCO-Semiprepolymeren, lassen sich ohne Behandlung der NCO-Verbindungen durch Dünnschichten oder ähnliche Verfahren Polyamine herstellen, die praktisch frei von monomerem Polyamin sind. Es lassen sich so in einfacher Weise und in einem verbundenen Reaktionsschritt auch modifizierte Polyamine, die in einem Molekül zusätzlich über Urethangruppen, Thiourethangruppen oder Harnstoffgruppen verknüpfte Polyaminsegmente, gegebenenfalls unterschiedlicher Art, besitzen, herstellen.

Aus einer z.B. difunktionellen NCO-Verbindung läßt sich durch Verwendung einer tri- oder höherfunktionellen, "H-aktiven Gruppe" besitzenden Verbindung bei der NCO-Hydrolyse so ein tri- oder höherfunktionelles Polyamin gewinnen.

Polyamine mit 0,19 bis 20,3, vorzugsweise 0,46 bis 11,3, besonders bevorzugt 0,58 bis 6,7 Gew.-% an primaren Aminogruppen werden nach dem angegebenen Verfahren hergestellt. Polyamine mit aromatisch gebundenen primären Aminogruppen aus NCO-Verbindungen mit aromatisch gebundenen NCO-Gruppen sind dabei bevorzugt; ganz besonders bevorzugt sind Polyamine aus NCO-Verbindungen auf der Basis von Toluylendiisocyanaten.

Die nach dem Verfahren zugänglichen Polyamine werden zur Herstellung von Polyurethanen, gegebenenfalls zellförmigen Polyurethankunststoffen und Polyurethanschaumstoffen durch Umsetzung von

A) Polyisocyanaten und/oder blockierten Polyisocyanaten (einschließlich der NCO-Prepolymeren), mit

B) Polyaminen sowie gegebenenfalls

C) weiteren, niedermolekularen und/oder höhermolekularen Verbindungen mit gegenüber Isocyanaten reaktiven Gruppen, gegebenenfalls

D) in Anwesenheit an sich bekannter Hilfs- und Zusatzstoffe und/oder Lösungsmittel,

verwendet, wobei als Komponente B) die nach dem erfindungsgemäßen Verfahren hergestellten Polyamine eingesetzt werden.

Die zwei oder mehrere, aromatische, heterocyclische und/oder aliphatische, vorzugsweise aromatische, NCO-Gruppen aufweisenden, im erfindungsgemäßen Verfahren einsetzbaren NCO-Verbindungen a), im folgenden auch kurz "NCO-Verbindungen" genannt, stellen entweder modifizierte Polyisocyanate dar, wie sie durch teilweise Umwandlung der Isocyanatgruppen in Urethan-, Harnstoff-, Biuret-, Uretdion-, Isocyanurat- und/oder Uretonimingruppen entstehen, oder sind sogenannte NCO-Prepolymere aus gegenüber NCO-Gruppen reaktive H-Gruppen tragenden, mehrwertigen Verbindungen des Molekulargewichts 62 bis 12 000, vorzugsweise 400 bis 6 000, und (überschüssigen) Mengen an aromatischen Polyisocyanaten oder sind gegebenenfalls "Semiprepolymere" aus NCO-Prepolymeren und zusätzlichen niedermolekularen

Polyisocyanaten.

Als modifizierte aromatische Polyisocyanate sind beispielsweise geeignet:

Urethangruppen-haltige Polyisocyanate (durch Modifizierung mit niedermolekularen Polyolen entstanden), Harnstoffgruppen aufweisende Polyisocyanate (Wassermodifizierung, DE-PS 1 230 778), Biuretgruppen aufweisende Polyisocyanate (US-PS 3 124 605, 3 201 372, GB-PS 889 050), Isocyanuratgruppen aufweisende Polyisocyanate (DE-PS'en 1 022 789 und 1 222 067) sowie Uretdion- oder Uretonimingruppen enthaltende, dimere oder oligomere Polyisocyanate. Es sind dies bekannte Verbindungen oder sie sind nach bekannten Verfahren zugänglich. Eine Reihe solcher Uretdionpolyisocyanate ist in Analytical Chemistry of the Polyurethanes, Band 16/III, High-Polymers-Series (Wiley 1969) aufgeführt. Ferner sind beispielsweise Carbodiimidgruppen aufweisende Polyisocyanate geeignet.

Solche modifizierten Polyisocyanate mit Urethan- und/ oder Harnstoff- und/oder Biuret- und/oder Uretdionund/oder Isocyanurat- und/oder Uretonimin-Gruppen, wie sie im erfindungsgemäßen Verfahren einsetzbar sind, haben üblicherweise einen NCO-Gehalt von 5 bis 40 Gew.-%, bevorzugt 10 bis 25 Gew.-%.

Die im erfindungsgemäßen Verfahren einzusetzenden NCO-Verbindungen a) sind besonders jedoch NCO-Prepolymere, wie sie in an sich bekannter Weise durch Umsetzung von niedermolekularen und/oder höhermolekularen Hydroxy- und/oder Amino- und/oder Thiolgruppen als reaktive Gruppen enthaltenden Verbindungen (Molekulargewicht 62 bis ca. 12 000) mit einem Überschuß an Polyisocyanaten entstehen.

Als Polyisocyanate zur Herstellung der freie NCO-Gruppen aufweisenden Verbindungen kommen im Prinzip beliebige, aromatische, aliphatische und heterocyclische Polyisocyanate infrage, wie sie z.B. von W. Siefken in Justus Liebigs Annalen der Chemie, 562, 8. 75-136, beschrieben werden, beispielsweise solche der Formel Q $(NCO)_n$, in der n = 2 bis 4, vorzugsweise 2 und Q einen Kohlenwasserstoffrest mit 4 bis 15, einen arotischen Kohlenwasserstoffrest mit 6 bis 15, vorzugsweise 6 bis 13 C-Atomen, bedeuten, z.B. 1,3- und 1,4-Phenylendiisocyanat, 2,4- und 2,6-Toluylendiisocyanat, sowie beliebige Gemische dieser Isomeren, Diphenylmethan-2,4'- und/oder -4,4'- und/oder -2,2'-diisocyanate, einschließlich der Mono- bis Tetra-$C_1$-$C_8$-alkyl- und/oder chlor-substituierten Derivate und Naphthylen-1,5-diisocyanat. Geeignete Diisocyanate sind auch die in DE-A 2 922 966 beschriebenen 2,4'-Diisocyanatodiphenylsulfide und die in z.B. EP 24 665 und DE-A 2 935 318 beschriebenen alkylsubstituierten Diphenylmethandiisocyanate. Auch aliphatische und/oder cycloaliphatische Polyisocyanate wie 1,6-Hexandiisocyanat, Lysinmethylesterdiisocyanat, Isophorondiisocyanat, die Dicyclohexylmethandiisocyanatisomeren oder biurethaltige oder isocyanurathaltige, etwa trifunktionelle Polyisocyanate auf Basis Hexan-1,6-diisocyanat oder Isophorondiisocyanat können zur Anwendung kommen.

Ferner kommen beispielsweise in Frage: Triphenylmethan-4,4',4"-triisocyanat, Polyphenyl-polymethylenpolyisocyanate, wie sie durch Anilin-Formaldehyd-Kondensation und anschließende Phosgenierung erhalten und z.B. in den GB-PS'en 874 430 und 848 671 beschrieben werden, m- und p-Isocyanatophenylsulfonylisocyanate, perchlorierte Arylpolyisocyanate, Isocyanuratgruppen aufweisende Polyisocyanate, Urethangruppen aufweisende Polyisocyanate, wie sie z.B. in der BE-PS 752 261 oder in den US-PS'en 3 394 164 und 3 644 457 beschrieben werden, acylierte Harnstoffgruppen aufweisende Polyisocyanate gemäß der DE-PS 1 230 778 sowie durch Telomerisationsreaktionen hergestellte Polyisocyanate, wie sie z.B. in der US-PS 3 654 196 beschrieben werden. Ferner sind Diarylalkylendiisocyanate, welche durch Polymerisation von Acrylnitril und gegebenenfalls weiteren ethylenisch ungesättigten Monomeren in den Diarylalkylendiisocyanaten nach dem Verfahren der EP-A 37 112 (US-PS 4 283 500) erhalten werden, einsetzbar. Weiterhin geeignet sind polymer-modifizierte polyisocyanate nach EP-A 37 112.

Bevorzugt werden in der Regel die technisch leicht zugänglichen Polyisocyanate, z.B. das 2,4- und 2,8-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI"), sowie Urethangruppen, Isocyanuratgruppen oder Harnstoffgruppen aufweisende Polyisocyanate ("modifizierte Polyisocyanate"). Besonders bevorzugt werden die modifizierten Polyisocyanate, die sich vom 2,4- und/oder 2,6-Toluylendiisocyanat (TDI) bzw. vom 4,4'- und/oder 2,4'- und/oder 2,2'-Diphenylmethandiisocyanat (MDI) ableiten. Technisch ist die Verwendung von TDI und MDI (oder ihren jeweiligen Isomergemischen) zur NCO-Prepolymerherstellung am bedeutsamsten.

Für die Herstellung der NCO-Prepolymeren werden vorzugsweise höhermolekulare Verbindungen mit einem Molekulargewicht von 400 bis 12 000, insbesondere 400 bis 6000, eingesetzt, welche mindestens 1,9, vorzugsweise 2 bis 4, insbesondere 2 bis 3, reaktive Hydroxyl-, Amino- und/oder Thiolgruppen (bevorzugt Hydroxylgruppen) als reaktive "H-aktive" Gruppen pro Mol aufweisen. In Frage kommen beispielsweise die in der Polyurethanchemie üblichen, gegenüber Isocyanaten reaktive Gruppen tragenden Polyacetale, Polythioether, Polycarbonate, Polyamide, Polysiloxane und/oder Polybutadiene, besonders Polyester, Polylactone sowie Polyether; insbesondere aber Hydroxylgruppen tragende Polyether.

Die erfindungsgemäß bevorzugten, mindestens zwei, in der Regel zwei bis acht, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoyid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propandiol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether

sowie auf Formit oder Formose gestartete Polyether kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

Auch OH-, NH- und/oder SH-Gruppen aufweisende Polybutadiene sind erfindungsgemäß geeignet (s. Progress Org. Coatings, Band 7 (3), 289-329 (1979)).

Als Polyacetale kommen z.B. die aus Glykolen, wie Di- oder Triethylenglykol, 4,4'-Dihydroxyethoxydiphenylmethan, Hexandiol und Formaldehyd oder durch Polymerisation cyclischer Acetale, wie z.B. Trioxan, herstellbaren Verbindungen in Frage.

Als Hydroxylgruppen aufweisende Polycarbonate kommen solche der an sich bekannten Art in Betracht, die z.B. durch Umsetzung von Diolen wie Propandiol-1,3, Butandiol-1,4 und/oder Hexandiol-1,6, Di-, Tri- oder Tetraethylenglykol oder Thiodiglykol mit Diarylcarbonaten, z.B. Diphenylcarbonat, oder Phosgen hergestellt werden können (DE-B 1 694 080, 1 915 908 und 2 221 751; DE-A 2 605 024).

Als Polyester aus Dicarbonsäuren und Diolen kommen vorzugsweise solche aus Adipinsäure und (weniger bevorzugt) Isophthalsäure und geradkettigen und/oder verzweigten Diolen in Betracht, ebenso Lactonpolyester, vorzugsweise auf Basis von Caprolacton und Starterdiolen, wie z.B. Diethylenglykol oder Hexadiol-1,6.

Unter den Polythioethern seien insbesondere die Kondensationsprodukte von Thiodiglykol mit sich selbst und/oder mit anderen Glykolen angeführt.

Auch bereits Urethan- oder Harnstoffgruppen enthaltende Polyhydroxylverbindungen sowie gegebenenfalls modifizierte natürliche Polyole sind verwendbar. Auch Anlagerungsprodukte von Alkylenoxiden an Phenol-Formaldehyd-Harze oder auch an Harnstoff-Formaldehyd-Harze sind erfindungsgemäß einsetzbar. Es ist auch möglich, z.B. gemäß DE-A 2 559 372, in die Polyhydroxylverbindungen Amidgruppen einzuführen.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den o.g., Hydroxylgruppen aufweisenden Verbindungen ablaufen läßt. Derartige Verfahren sind beispielsweise in den DE-B 1 168 075 und 1 260 142, sowie den DE-A 2 324 134, 2 423 984, 2 512 385, 2 513 815, 2 550 796, 2 550 797, 2 550 833, 2 55 862, 2 633 293 und 2 639 254 beschrieben. Es ist aber auch möglich, gemäß US-PS 3 869 413 bzw. 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-PS 3 383 351, 3 304 273, 3 523 093, 3 110 695; DE-B 1 152 536) oder Polycarbonatpolyolen (DE-PS 1 769 795; US-PS 3 637 909) erhalten werden, sind für das erfindungsgemäße Verfahren geeignet.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der o.g. Verbindungen mit mindestens zwei gegenüber Isocyanaten reaktionsfähigen Wasserstoffatomen mit einem Molekulargewicht von 400 bis 12 000, z.B. Mischungen von verschiedenen Polyethern, eingesetzt werden.

Für die Herstellung des im erfindungsgemäßen Verfahren einzusetzenden NCO-Prepolymeren kommen, gegebenenfalls nur anteilweise, als Ausgangskomponenten auch Verbindungen mit mindestens zwei gegenüber Isocyanaten reaktionsfähigen Wasserstoffatomen ("H-aktive Gruppen") und einem Molekulargewicht von 18 bis 399, vorzugsweise 62 bis 399, in Betracht. Auch in diesem Fall versteht man hierunter Wasser und/oder Hydroxylgruppen und/oder Aminogruppen und/oder Thiolgruppen, vorzugsweise Hydroxylgruppen aufweisende Verbindungen, wie sie als Kettenverlängerungsmittel oder Vernetzungsmittel aus der Polyurethanchemie an sich bekannt sind. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 62 bis 399 verwendet werden.

Als Beispiele für derartige Verbindungen seien genannt: Wasser, Ethylenglykol, Propandiol-(1,2) und -(1,3), Butandiol-(1,4) und -(2,3), Pentandiol-(1,5), Hexandiol-(1,6), Octandiol-(1,8), Neopentylglykol, 1,4-Bishydroxymethyl-cyclohexan, 2-Methyl-1,3-propandiol, Dibrombutendiol, Glyzerin, Trimethylolpropan, Hexantriol-(1,2,6), Trimethylolethan, Pentaerythrit, Chinit, Mannit und Sorbit, Dianhydrosorbit und Dianhydromannit, Ricinusöl, Di-, Tri- und Tetraethylenglykol, Di-, Tri- und Tetrapropylenglykol, Dibutylenglykol und höhere Polyethylen-, Polypropylen- oder Polybutylenglykole mit einem Molekulargewicht bis 399, 4,4'-Dihydroxy-diphenylpropan, Di-hydroxyethyl-hydrochinon, Ethanolamin, Diethanolamin, N-Methyldiethanolamin, Triethanolamin und 3-Aminopropanol.

Als niedermolekulare Polyole kommen auch die Gemische von Hydroxyaldehyden und Hydroxyketonen ("Formose") bzw. die hieraus durch Reduktion erhaltenen mehrwertigen Alkohole ("Formit") in Frage, wie sie bei der Selbstkondensation von Formaldehydhydrat entstehen (DE-A 2 639 084, 2 714 084).

Erfindungsgemäß geeignete aliphatische Diamine sind beispielsweise Ethylendiamin, 1,4-Tetramethylendiamin, 1,6-Hexamethylendiamin, 1,12-Dodecamethylendiamin sowie deren Gemische, 1-Amino-3,3,5-trimethyl-5-amino-methylcyclohexan ("Isophorondiamin"), 2,4- und 2,6-Hexahydrotoluylendiamin sowie deren Gemische, Perhydro-2,4'- und -4,4'-diaminodiphenylmethan, p-Xylylendiamin, Bis-(3-aminopropyl)-methylamin, Diaminoperhydroanthrazene und cycloaliphatische Triamine gemäß DE-A 2 614 244. Auch Hydrazin und substituierte Hydrazine, z.B. Methylhydrazin oder Dihydrazidverbindungen, kommen erfindungsgemäß in Betracht.

Als Beispiele für aromatische Diamine seien die Ethergruppen aufweisenden Diamine gemäß DE-A 1 770 525 und 1 809 172 (US-PS'en 3 654 364 und 3 736 295), gegebenenfalls in 5-Stellung substituierte 2-Halogen-1,3-phenylendiamine, 3,3'-Dichlor-4,4'-diaminodiphenylmethan, Toluylendiamin, 4,4'-Diaminodiphenylmethan, 4,4'-Diaminodiphenyldisulfide, Diaminodiphenyldithioether, durch Alkylthiogruppen substituierte aromatische Diamine (DE-A 2 638 760), Sulfonat- oder Carboxylatgruppen enthaltende aromatische Diamine (DE-A 2 720 166) sowie die in der DE-A 2 635 400 aufgeführten hochschmelzenden Diamine genannt. Beispiele für aliphatisch-aromatische Diamine sind die Aminoalkylthioaniline gemäß DE-A 2 734 574.

Zur Herstellung der NCO-Verbindungen ebenfalls verwendbare Verbindungen (wenn auch weniger bevorzugt) sind organofunktionelle Polysiloxane, die zwei endständige, gegenüber Isocyanatgruppen reaktionsfähige Gruppen und Struktureinheiten der Formel $-O-Si(R)_2-$ aufweisen, wobei in dieser Formel R für einen $C_1$-$C_4$-Alkyl- oder einen Phenylrest, vorzugsweise jedoch für einen Methylrest, steht. Erfindungsgemäß eignen sich als Ausgangsmaterialien sowohl die an sich bekannten, endständige organofunktionelle Gruppen aufweisenden reinen Polysiloxane als auch die an sich bekannten endständig organofunktionellen Siloxanpolyoxyalkylencopolymeren.

Die erfindungsgemäß besonders bevorzugten Organopolysiloxane entsprechen der allgemeinen Formel

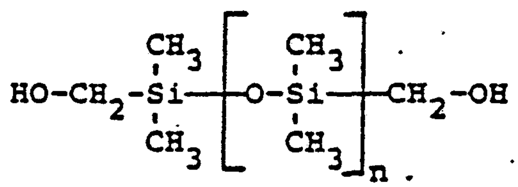

n = 5 bis 29

Sie werden in an sich bekannter Weise durch Äquilibrierung von 1,1,3,3-Tetramethyl-1,3-hydroxymethyl-disiloxan der Formel

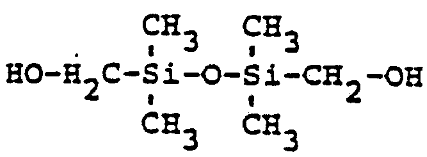

mit Octamethylcyclotetrasiloxan in Gegenwart von Schwefelsäure bzw. nach dem Verfahren der DE-B 1 236 505 hergestellt.

Die freie, aromatisch gebundene Isocyanatgruppen aufweisenden NCO-Prepolymeren werden in an sich bekannter Weise durch Umsetzung der Reaktionspartner in der Schmelze oder in Lösung hergestellt. Das Äquivalentverhältnis von NCO-Gruppen zu aktive Wasserstoffatome aufweisenden Gruppen (bevorzugt OH-Gruppen) ist in jedem Fall größer als 1, soll in der Regel zwischen 1,5:1 und 2,8:1 liegen. Selbstverständlich ist es möglich, einen noch größeren Überschuß an Polyisocyanat zu verwenden. Die NCO-Prepolymeren ("NCO-Voraddukte") haben je nach den gewählten Ausgangskomponenten im allgemeinen ölige bis wachsartige Konsistenz. Beträgt das NCO/OH-Verhältnis mehr als 2, so erhält man im wesentlichen nicht verlängerte NCO-Voraddukte, während NCO/OH-Verhältnisse von unter 2 eine Erhöhung des mittleren Molekulargewichts der NCO-Voraddukte zur Folge haben. Es ist, wie schon erläutert, auch möglich, niedermolekulare Polyole als Kettenverlängerungsmittel bei der Herstellung der NCO-Prepolymere anteilmäßig neben höhermolekularen Ausgangsverbindungen mitzuverwenden; in diesem Fall erhält man ebenfalls höhermolekulare NCO-Voraddukte.

Werden die so erhaltenen NCO-prepolymere noch einer Destillation - vorteilhaft unter Verwendung eines Dünnschichtverdampfers - unterworfen, wobei die monomeren Polyisocyanate entfernt werden, so werden im erfindungsgemäßen Verfahren produkte mit einem sehr geringen bzw. praktisch ohne Gehalt an monomerem Diamin erhalten.

Für das erfindungsgemäße Verfahren werden NCO-Prepolymere bevorzugt, die aus höhermolekularen Polyolen (Molmasse 400-12 000), vorzugsweise Polyetherpolyolen, gegebenenfalls unter Mitverwendung von Kettenverlängerungsmitteln der oben beschriebenen Art (Molmasse 62-399), durch Umsetzung mit aromatischen Diisocyanaten im Äquivalentverhältnis von 1:1,5 bis 1:2,8, insbesondere ca. 1:1,5 bis 1:2, erhalten worden sind.

Der NCO-Gehalt der eingesetzten NCO-Prepolymere beträgt 0,5 % bis 30 Gew.-%, bevorzugt 1,2 Gew.-% bis 25 Gew.-%, besonders bevorzugt 1,5 Gew.-% bis 10 Gew.-%.

Im erfindungsgemäßen Verfahren können jedoch auch sogenannte "Semiprepolymere", d.h. Mischungen von NCO-Prepolymeren mit weiteren freien polyisocyanaten, eingesetzt werden, die einen u.U. noch höheren Gehalt, z.B. bis 40 Gew.-% NCO, aufweisen können. Aus praktisch/wirtschaftlichen Gründen ist dies jedoch in den meisten Fällen nicht sinnvoll, außerdem können die aus den monomeren Polyisocyanatanteilen entstandenen monomeren Aminanteile bei einer Reihe von Anwendungen stören.

Die freie NCO-Gruppen aufweisenden Verbindungen a) in Form ihrer (zumeist urethangruppenfreien) modifizierten Isocyanate bzw. in Form ihrer (urethangruppenhaltigen) NCO-Prepolymeren bzw. ihrer "Semiprepolymeren" besitzen insgesamt einen Gehalt an NCO-Gruppen innerhalb von 0,5 bis 40 Gew.-%, bevorzugt 1,2 bis 25 Gew.-% und besonders bevorzugt von 1,5 bis 15 Gew.-% NCO.

Die Wassermenge b) beträgt mindestens 1 Mol Wasser pro Mol NCO-Gruppe bei der Hydrolyse der NCO-Verbindung a). Bevorzugt wird die $\geqslant$ 5-fache (besonders bevorzugt $\geqslant$ 10-fache) stöchiometrische Wassermenge, verwendet. Zumeist liegt der Anteil Wasser oberhalb von 1 Teil pro 100 Teile NCO-Verbindung a).

Als unlösliche Katalysatoren c) werden Basen, die sowohl in Wasser als auch in allen gängigen organischen Lösungsmitteln im wesentlichen unlösliche, organische oder anorganische Verbindungen darstellen, eingesetzt. Sie können bereits Wasser gebunden enthalten.

Geeignete Verbindungen sind z.B. etwa die Carbonate der Metalle der 2. Hauptgruppe des PSE, z.B. Calciumcarbonat oder unlösliche Erdmetalloxide wie z.B. basisches Aluminiumoxid. Geeignete unlösliche Katalysatoren sind ferner sog. Doppeloxide, die stöchiometrisch oder nicht stöchiometrisch sein können und zumindest z.T. aus einem ein Metall aus der 1., 2. oder 3. Hauptgruppe des PSE oder ein Seltenerdelement enthaltenden Metalloxid bestehen. Beispiele für solche Verbindungen sind Aluminiumsilikate oder Erdalkalititanate oder Erdalkalisilikate wie z.B. basisches Magnesiumsilikat oder wasserunlösliche, z.B. geglühte (polymere) Silikate.

Eine ungeeignete und in erfindungsgemäßen Sinne nicht einsetzbare und als löslich betrachtete Base ist z.B. Soda, obwohl sich in einem 90°C heißen Gemisch aus 250 g Dimethylformamid und 50 g Wasser nur rund 0,14 g $Na_2CO_3$ lösen. Soda ist jedoch für sich alleine wasserlöslich.

Weitere geeignete Basen sind solche, die chemisch oder physikalisch auf anorganischen oder organischen Trägern immobilisierte metallische oder nichtmetallische Basen darstellen.

Dazu gehören beispielsweise sog. "basische Ionenaustauscherharze", die an einer in einer makromolekularen Matrix gebundenen Benzylgruppe Dialkylamino- oder Trialkylammoniumhydroxideinheiten tragen. Geeignete produkte sind beispielsweise basische Ionenaustauscherharze (Lewatit ® 500, 504, Mp 500, Mp 500 A, M 600, M 62, Mp 64 der Bayer AG, D 5090 Leverkusen).

Weitere geeignete makromolekulare Basen sind die Komplexe von cyclischen und acyclischen Kronenethern, Cryptanden, Podanden und Phasentransferkatalysatoren, die gewöhnlich geeignet substituierte Oniumverbindungen wie Sulfonium-, Ammonium- und Phosphoniumverbindungen darstellen, mit Metallverbindungen und Ammoniumverbindungen, wie sie oben aufgeführten wurden und in denen die Kronenether-, Cryptand-, Podand- und Oniumverbindungseinheiten über kovalente Bindungen an eine makromolekulare, unlösliche Matrix wie z.B. ein Styrol/Divinylbenzol-Gerüst gebunden sind.

Die Katalysatoren können auch in beliebiger Mischung verwendet werden.

Die einzusetzenden Mengen an Katalysatoren betragen im allgemeinen ca. 1 - 200 g, bevorzugt 2 - 50 g, besonders bevorzugt 5 - 30 g Katalysator pro Mol NCO-Gruppe aus a).

Als wasserlösliche/wassermischbare Lösungsmittel d) werden solche auf Etherbasis, vorzugsweise Dioxan und Tetrahydrofuran, jedoch auch die Ether des Ethylenglykols, Diethylenglykols oder Propylenglykols, ferner wassermischbare Lösungsmittel mit z.B. Carbonsäuredialkylamid-, Nitril-, Keto- und anderen Gruppen eingesetzt.

Geeignete Lösungsmittelklassen sind:

1. wasserlösliche, aliphatische oder cycloaliphatische Säureamide mit 1 bis 10 Kohlenstoffatomen, z.B. Dimethylformamid, Diethylformamid, N-Methylpyrrolidon, Dimethylacetamid, Caprolactam, Formamid. Bevorzugt sind Dimethylformamid, Dimethylacetamid und N-Methylpyrrolidon,

2. wasserlösliche Ether des Ethylenglykols, Diethylenglykols oder Propylenglykols, sowie die cyclischen Ether Tetrahydrofuran und 1,4-Dioxan, ferner

3. wasserlösliche, tetraalkylierte aliphatische Harnstoffe mit 4 bis 12 C-Atomen, z.B. Tetramethylharnstoffe oder Tetraethylharnstoff,

4. wasserlösliche, aliphatische oder cycloaliphatische Sulfone oder Sulfoxide mit 2 bis 10 Kohlenstoffatomen, z.B. Tetramethylensulfon oder Dimethylsulfoxid,

5. wasserlösliche, aliphatische oder cycloaliphatische Phosphorsäureamide, z.B. Hexamethylphosphorsäuretriamid,

6. Acetonitril,

7. wasserlösliche Ketone wie Aceton oder teilwasserlösliche Ketone wie Methylethylketon (MEK).

Die Lösungsmittel können auch in beliebigen Mischungsverhältnissen zueinander eingesetzt werden. Unter den genannten Lösungsmitteln werden solche bevorzugt, welche bei Normaldruck unter 250°C, vorzugsweise bei 64 bis 165°C, sieden, da sich hierbei die Aufarbeitung vereinfacht.

Bevorzugte wassermischbare Lösungsmittel sind Dimethylformamid, Dimethylacetamid, N-Methylpyrrolidon, Tetramethylensulfon, Acetonitril, Aceton, 1,4- Dioxan und Tetrahydrofuran. Technisch ganz besonders geeignet und zugänglich sind Dimethylformamid, Acetonitril, Aceton und Dioxan, weniger

bevorzugt sind die Zerewitinoffaktiven Substanzen, wie z.B. Caprolactam oder Formamid. Insbesondere bei kontinuierlicher Arbeitsweise möglich, aber insgesamt weniger bevorzugt ist die gegebenenfalls nur anteilige Verbindung von Alkanolen oder Phenolen als Lösungsmittel, z.B. Propanol, t-Butanol oder Phenol.

Eine Mitverwendung von nicht vollständig oder nur geringfügig mit Wasser mischbaren Lösungsmitteln, z.B. Propionitril, Methylethylketon, Ethylacetat oder Kohlenwasserstoffen ist in untergeordneten Mengen zur Erleichterung der Phasentrennung bei Raumtemperatur zweiphasiger Reaktionsgemischen möglich.

Für die Mengen einzusetzenden Lösungsmitteln d) gelten vorzugsweise folgende Randbedingungen des Verfahrens:

1. Pro 100 Teile NCO-Verbindung a) sollen in der Hydrolyse-Reaktionsmischung $\geqslant$ 10, bevorzugt $\geqslant$ 20 und besonders bevorzugt $\geqslant$ 40 Teile d) verwendet werden.

2. Es muß soviel Wasser b) und gegebenenfalls Lösungsmittel d) verwendet werden, daß eine im wesentlichen homogene (höchstens schwach trübe) oder vorzugsweise eine homogene, klare Lösung mit der NCO-Verbindung und Wasser bei den Reaktionstemperaturen gebildet wird.

Die katalytisch wirkenden unlöslichen Verbindungen werden im allgemeinen in den Lösungsmitteln und Wasser suspendiert. Die Zugabe zur Isocyanatgruppen-haltigen Verbindung ist u.U. möglich, aber nicht bevorzugt.

Zur Hydrolyse der NCO-Verbindung zu Polyaminen mit hinreichend hoher Aminzahl (hoher Konversionsrate) ist es günstig, eine Konzentration der NCO-Verbindung $\leqslant$ 66 Gew.-% in der Reaktionsmischung aufrechtzuerhalten. Je größer die Verdünnung bei der Reaktion gewählt wird, um so besser wird im allgemeinen der Hydrolyseumsatz, d.h. es werden um so höhere Aminzahlen des Polyamins, d.h. eine um so höhere Konversion der NCO- in die $NH_2$-Gruppen, erhalten. Eine Grenze der Verdünnung ergibt sich praktisch aus der Wirtschaftlichkeit bei der Aufarbeitung; sie liegt in der Praxis etwa bei 3 %iger Lösung.

Es ist aber bei der NCO-Hydrolysereaktion mindestens so viel Lösungsmittel mitzuverwenden, daß eine weitgehend homogene, vorzugsweise homogene, Reaktionsmischung verbleibt.

In einer weniger bevorzugten Ausführungsform können der Reaktionsmischung auch "H-aktive Gruppen" enthaltende Verbindungen mit ein, zwei oder mehreren Hydroxy-, Amino- und/oder Thiolgruppen beigemischt werden. Diese Verbindungen wurden bereits als Aufbaukomponenten der im erfindungsgemäßen Verfahren einsetzbaren NCO-Verbindungen genannt, besonders bevorzugt sind difunktionelle bis gegebenenfalls tetrafunktionelle Verbindungen des Molekulargewichts 32-2000, insbesondere solche mit mindestens 2 primären Hydroxygruppen, z.B. Ethandiol, Butandiol, Propandiol, Polyethylenglykole, Trimethylolpropan oder ähnliche. Selbstverständlich können auch Verbindungen mit verschiedenen "H-aktiven Gruppen" verwendet werden, z.B. Aminoethanole.

Verbindungen, die nur eine H-aktive Gruppe aufweisen, z.B. Methanol, Ethanol, Cyclohexanol, Cyclohexylamin, Anilin, asymmetrisches Dimethylhydrazin, Dimethylaminopropylamin, können als monofunktionelle Kettenabbrecher mitverwendet werden.

Als Nebenreaktion im erfindungsgemäßen Verfahren kann die Vorverlängerung auftreten, d.h. Isocyanat und bereits gebildetes Amin reagieren unter Kettenverknüpfung zu Harnstoffen. Diese Nebenreaktion läßt sich durch Arbeiten in verdünnter Lösung, der Verwendung der erfindungsgemäßen Katalysatoren und der Einhaltung relativ hoher Reaktionstemperaturen, z.B. 80 bis 130°C, weitgehend zurückdrängen. Zwar ist ein möglichst geringes Ausmaß dieser Nebenreaktionen erwünscht, aus ökonomischen Gründen kann aber auch ein gewisser Grad an Vorverlängerung in Kauf genommen werden.

Die erfindungsgemäße Reaktion wird bevorzugt in homogener Phase durchgeführt. Durch ein geringfügiges Überdosieren der Wassermenge oder der Menge der NCO-Verbindung kann gegebenenfalls eine leichte Trübung der Reaktionsmischung (abgesehen von der Trübung durch die unlöslichen Katalysatoren) eintreten, da die Ausgangsstoffe nicht mehr vollständig gelöst sind. Eine Durchführung im stark heterogenen Bereich, z.B. durch übermäßige Wasserzugabe unter Ausfällung des NCO-Prepolymers ergibt jedoch unzureichende Produkte. Durch einige wenige Vorversuche lassen sich die von den Ausgangsverbindungen abhängigen optimalen Mischungsverhältnisse leicht bestimmen.

Die Reaktion kann bei Temperaturen unter 165°C z.B. 50 bis 165°C durchgeführt werden. Bevorzugt wird jedoch, bei Temperaturen von 80 bis 130°C gearbeitet, da hierbei die besten Raum/Zeit-Ausbeuten bei gleichzeitig hoher Löslichkeit und überraschenderweise geringster Harnstoff-Verlängerung erreicht werden. Besonders bevorzugt wird am Siedepunkt des Gemisches gearbeitet, der wegen der Anwesenheit von Wasser zumeist bei ca. 90 bis 105°C liegt. Unter besonderen Umständen kann es auch notwendig werden, die Reaktion unter Druck durchzuführen, um ausreichend hohe Temperaturen zu erhalten.

Das Einsetzen der Reaktion ist durch die fast spontane Abspaltung von $CO_2$ zu erkennen, die auch bereits bei niedrigen Temperaturen, z.B. 20°C, beobachtbar ist. Es ist jedoch erheblich günstiger, erfindungsgemäß bei den angegebenen höheren Temperaturen zu arbeiten, um die Harnstoffbildung zurückzudrängen. Wichtig ist, daß für eine sehr gute und schnelle Durchmischung unter homogener Lösung der Reaktanden gesorgt wird, was im wesentlichen durch die Verwendung der Lösungsmittel sichergestellt werden muß. In gleicher Richtung wirkt auch die Viskositätsverminderung bei Anwendung der höheren Reaktionstemperaturbereiche. Die Reaktion kann diskontinuierlich oder kontinuierlich durchgeführt werden.

In einer diskontinuierlichen Ausführungsform wird z.B. die NCO-Gruppen aufweisende Verbindung a) in die wäßrige, Lösungsmittel und Katalysatoren enthaltende Mischung, eingebracht. Dies kann mittels eines Tropftrichters oder z.B. durch maschinelle Einspritzung mittels einer Düse geschehen, wobei durch intensives Rühren eine möglichst gute Verteilung angestrebt wird.

Es ist aber auch möglich, die gegebenenfalls den Katalysator gegebenenfalls nur anteilig enthaltende NCO-Gruppen aufweisende Verbindung, bevorzugt bei Raumtemperatur vorzulegen und das gegebenenfalls den Katalysator gegebenenfalls anteilig enthaltende Solvens/ Wasser-Gemisch zuzusetzen und die Reaktion bei z.B. 10-150°C vorzunehmen oder nach Beendigung der bei tiefer (z.B. -10 bis +15°C) Temperatur erfolgten Zugabe gegebenenfalls langsam auf höhere Temperaturen zu erwärmen.

In einer kontinuierlichen Ausführungsform, die für eine großtechnische Produktion besonders geeignet ist, werden die NCO-Verbindungen a) (gegebenenfalls als Lösung) und die wäßrige Lösung getrennt einem gemeinsamen Reaktionsraum, in dem sich der Katalysator befindet, zudosiert, z.B. mittels eines Durchflußmischers intensiv vermischt, so zur Reaktion gebracht und aus dem Mischraum schnell ausgetragen. Die Dosierung kann z.B. über graduierte Tropftrichter oder mittels einer Kolben- und/oder Membrandosierpumpe oder einer anderen maschinellen Dosiervorrichtung vorgenommen werden. Es ist bei der kontinuierlichen Dosierung bevorzugt, beide Komponenten in sehr kurzer Zeit (Sekunden oder Bruchteilen davon) mit einer geeigneten, gegebenenfalls maschinell betriebenen Vorrichtung, zu vermischen, zur Reaktion zu bringen und aus dem Reaktionsraum auszutragen. Den Katalysator über eine der beiden Reaktionskomponenten in den Reaktionsraum einzutragen ist bei einem solchen kontinuierlichen Verfahren nicht bevorzugt. Der feste, unlösliche Katalysator kann in fein suspendierter Form vorliegen oder in einer Schüttung, wie sie bei Ionenaustauscherharzen üblicherweise verwendet wird, eingesetzt werden.

Zur Erleichterung der Reaktion der Isocyanatgruppen von a) mit der wäßrigen Lösungsmittelphase, in welcher der Katalysator in suspendierter oder in fester Form (z.B. als Ionenaustauscher) vorliegt, können verschiedene Zusätze verwendet werden. So können zum Homogenisieren ein oder mehrere handelsübliche Emulgatoren zugesetzt werden, z.B. in Mengen von 0,01 bis 1 Gew.-Teil auf 100 Teile Reaktionsmischung. Bei Verwendung homogener Reaktionsmischungen (gelöste NCO-Verbindung) ist dies jedoch nicht notwendig.

Nach dem Mischungsvorgang kann direkt zum Polyamin aufgearbeitet werden, gegebenenfalls kann auch eine kurze Nachreaktionszeit von meistens weniger als 5 Minuten angeschlossen werden. Hierbei wird das Reaktionsgemisch bevorzugt unter Normaldruck am leichten Rückfluß erhitzt, um das entstandene Kohlendioxid möglichst vollständig abzutrennen. Die Reaktionsmischung kann ohne Nachteile aber auch längere Zeit auf Temperatur gehalten werden. Bevorzugt wird nach erfolgter Vermischung jedoch sofort aufgearbeitet.

Da der Katalysator im wesentlichen völlig unlöslich ist, kann sofort heiß oder auch nach Abkühlung filtriert werden. Dies kann z.B. so geschehen, daß das Reaktionsgemisch durch eine im Reaktionsgefäß eingebaute Filtriereinrichtung abgelassen wird und der Katalysator zurückbleibt. Es kann jedoch auch nach der Aufarbeitung filtriert werden. Für die Filtration vor der Destillation ist es unerheblich, ob ein Ein- oder Zweiphasensystem vorliegt.

Auch die Aufarbeitung kann kontinuierlich oder diskontinuierlich erfolgen. Die Aufarbeitung des Reaktionsgemisches geschieht gewöhnlich destillativ, extraktiv oder über eine Phasentrennung oder mit einer Kombination dieser Methoden.

Es werden, gegebenenfalls unter reduziertem Druck, die flüchtigen Bestandteile abdestilliert. Im allgemeinen werden Sumpftemperaturen (im verbleibenden Polyamin) von 100 bis etwa 130°C gegen Ende der Eindampfung eingehalten.

Extraktionsverfahren, gegebenenfalls nach Verdünnung mit Wasser, können mit wasserunlöslichen Lösungsmitteln wie Methylenchlorid oder Chlorbenzol durchgeführt werden, sind jedoch nicht bevorzugt.

Eine Phasentrennung des Reaktionsgemisches durch Abkühlung tritt in manchen Fällen ein, wenn die Hydrolyse bei relativ hohen Temperaturen und in Gegenwart von relativ viel Wasser an der Grenze der Löslichkeit vorgenommen wurde. Die Phasentrennung kann durch Zusatz von Wasser oder auch durch Zusatz von Wasser nicht oder nur zum Teil lösenden Solventen wie z.B. Methylethylketon oder Ethylacetat verbessert oder auch erst erreicht werden. Man trennt die wäßrige, gegebenenfalls Lösungsmittel enthaltende Phase von der Polyaminphase ab.

Die wäßrige Phase kann dann meistens direkt wiederverwendet werden.

Die Polyaminphase enthält neben dem Polyamin gegebenenfalls Restmengen den Katalysator, wenn vorher nicht filtriert wurde, etwas Wasser, sowie evtl. Lösungsmittel d), welche destillativ, gegebenenfalls unter Anlegen von Vakuum oder über eine Dünnschichtdestillation, möglichst vollständig entfernt werden. Sind noch Katalysatoren enthalten, können diese durch Filtration, z.B. über eine Drucknutsche, entfernt werden.

Normalerweise befindet sich der basische, unlösliche Katalysator aufgrund seiner spezifischen Schwere am Boden des Gefäßes in der im allgemeinen spezifisch schweren "Amin-Phase", so daß mit einer Phasentrennung erreicht werdem lamm. daß jeweils eine Phase die Gesamtmenge an Katalysator enthält. Es kann jedoch auch geschehen, insbesondere bei Verwendung von sehr feinverteilten Verbindungen, daß aminische und wäßrige Phase Katalysatoranteile enthalten.

Enthält die NCO-Gruppen-haltige Verbindung - bedingt durch ihre Herstellung - noch freies, d.h. monomeres Isocyanat, so kann u.U. das hieraus entstehende monomere Amin bei der Aufarbeitung durch Phasentrennung sich in der Wasser/Lösungsmittelphase stark anreichern. Das durch diese einfache Aufarbeitung erhaltene Polyamin ist dann praktisch monomerenfrei. Es kann sich dann aber empfehlen, die wäßrige Lösung durch Aufarbeitung von monomerem Amin weitgehend zu befreien, bevor sie wiederverwendet wird.

Die nach der Aufarbeitung erfindungsgemäß erhaltenen Polyamine stellen im allgemeinen farblose bis schwach gefärbte, mittelviskose bis hochviskose und gegebenenfalls höherschmelzende Produkte mit den bereits angegebenen Aminogruppengehalten dar. Diese Polyamine weisen entsprechend ihren

Ausgangsstoffen ferner Urethan- und/oder Harnstoff- und/oder Uretdion- und/oder Isocyanurat- und/oder Biuretgruppen, sowie gegebenenfalls Ether- und/oder Acetal- und/oder Carbonat- und/oder Ester- und/oder Thioether- und/oder Dialkylsiloxangruppen und/oder die Reste von Polybutadienen auf, wie sie bereits in den NCO-Verbindungen vorgelegen haben. Durch Nebenreaktionen können jedoch auch zusätzliche Bindungen entstehen, z.B. Harnstoffgruppen aus bereits verseiften Anteilen und noch verbliebenen NCO-Gruppen während der Hydrolysereaktion. Die Menge der in den Polyaminen enthaltenen primären aromatischen Aminogruppen entsprechen maximal der Menge der NCO-Gruppen in den NCO-Verbindungen, also etwa 0,19 bis 20,3 Gew.-% $NH_2$, bevorzugt 0,46 bis 11,3 Gew.-% $NH_2$ und besonders bevorzugt 0,58 bis 6,7 Gew.-% $NH_2$.

An aliphatische Reste gebundene NCO-Gruppen liefern hochreaktive aliphatische Amine als Hydrolysenprodukte, welche mit noch vorhandenen NCO-Gruppen sehr schnell zu Harnstoffverbindungen abreagieren können und somit zumeist relativ höhermolekulare polyharnstoffamine mit einem in vielen Fällen niedrigen $NH_2$-Gehalt ergeben.

Die erfindungsgemäß erhaltenen, bevorzugt aromatischen Polyamine werden wegen ihres niedrigen Dampfdruckes vorzugsweise als Reaktionspartner für gegebenenfalls blockierte Polyisocyanate bei der Herstellung von Polyurethanen (Polyurethanharnstoffen), gegebenenfalls zelligen Polyurethankunststoffen oder Polyurethanschaumstoffen eingesetzt, wobei sie gegebenenfalls auch mit anderen niedermolekularen (Molekulargewicht 32 bis 399) und/oder höhermolekularen (Molekulargewicht 400 bis ca. 12 000) Verbindungen mit gegenüber Isocyanaten reaktiven Gruppen kombiniert werden können. Geeignete Ausgangskomponenten für die Herstellung von Polyurethankunststoffen werden oben im Zusammenhang mit der Prepolymerherstellung bzw. auch in DE-A 2 302 564, DE-A 2 432 (US-PS 3 903 679) sowie in den DE-A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendenden Hilfs- und Zusatzstoffe.

Mittels der erfindungsgemäß zugänglichen Polyamine ist die Herstellung von Polyurethan (Harnstoff) en möglich. Ihre Anwendung kann z.B. für Elastomere, Beschichtungen, Fäden in der Applikation aus Schmelzen, Lösungen, Dispersionen oder als Reaktivkomponentenmischung erfolgen.

Weitere Verwendungszwecke der erfindungsgemäß zugänglichen Polyamine sind z.B. Kupplungskomponenten für Diazofarbstoffe, Härter für Epoxid- und Phenolharze, sowie alle anderen an sich bekannten Reaktionen von Aminen wie Amid- oder Imidbildung und andere.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

**Beispiele**

**Beispiele 1 - 3**

Jeweils vorgelegt wird eine Mischung aus 1500 ml Dimethylformamid, 250 g Wasser und wechselnden Mengen basischen Aluminiumoxids (nach Brockmann, Aktivitätsstufe I-Fa. Brockmann - Muttenz / Schweiz. Beispiel 1: 10 g $Al_2O_3$, Beispiel 2: 29 g Aluminiumoxid, Beispiel 3: 100 g $Al_2O_3$). Die Vorlage wird auf 90°C erhitzt und binnen 30 min unter intensivem Rühren mit 500 g eines NCO-Prepolymers mit dem NCO-Gehalt von 3,8 % versetzt. Intensive Gasentwicklung ist zu beobachten, die Reaktionsmischung ist nach Beendigung der Zugabe der NCO-Komponente sofort NCO-frei. Das Aluminiumoxid wird heiß abfiltriert. Beim Abkühlen auf 20°C separieren sich zwei Phasen voneinander, von denen die obere (jeweils ca. 1400 - 1500 ml) Phase abgetrennt und verworfen wird. Aus der unteren phase wird bei 100°C/15 mbar und dann 100°C/0,1 mbar das Lösungsmittel entfernt.

Daten in Tabelle 1.

Das NCO-Prepolymer wurde so hergestellt, daß Toluylen-2,4-diisocyanat und ein lineares Polypropylenglykol (OH-Zahl 56) im NCO:OH-Verhältnis 2:1 bei 20°C vereinigt und dann 4 h auf 80°C erhitzt wurden.

**Beispiel 4**

Vorgelegt wird eine Mischung aus 1500 ml Dimethylformamid, 250 ml Wasser und 28 g brite-sorb® (synthetisches Magnesiumsilikat der Philadelphia Quartz Company, USA). Sie wird auf 90°C erhitzt und unter intensivem Rühren mit 500 g des NCO-Prepolymers aus Beispiel 1 versetzt. Abtrennung des Katalysators, Phasentrennung und Produktisolierung erfolgen wie in Beispiel 1.

Daten in Tabelle 1.

**Beispiel 5**

Vorgelegt wird eine 90°C heiße Mischung aus 1500 ml Dimethylformamid, 250 ml Wasser und 143 ml eines basischen Ionenaustauscherharzes Lewatit® M 500 KR/OH (Bayer AG, D-5090 Leverkusen). Unter intensivem Rühren wird unter $CO_2$-Entwicklung 500 g des NCO-prepolymers aus Beispiel 1 zugegeben. Abtrennung des Katalysators, Phasentrennung und produktisolierung erfolgen wie in Beispiel 1.

Daten in Tabelle 1.

**Beispiel 6**

Anstelle von Lewatit® M 500 werden 2 0 ml des basischen Ionenaustauscherharzes Lewatit ® Mp 64 (Bayer AG) verwendet. Im übrigen wird wie in Beispiel 3 verfahren.

Daten in Tabelle 1.

**Beispiel 7**

Eine senkrecht angeordnete beheizbare Glassäule von 60 cm Länge und 5 cm Durchmesser, die unten mit einer groben Glassinterscheibe versehen und oben offen ist, wird mit 300 ml feuchtem basischen Ionenaustauscherharz Lewatit® MP 64 und 200 g Raschigringen mittlerer Größe beschickt und auf 90°C erhitzt. Innerhalb 20 min wird eine 15°C warme Lösung von 1 1 Dimethylformamid, 250 g des NCO-Prepolymers aus Beispiel 1 und 50 g Wasser durch diese Säule geschickt. Das Eluat wird durch Destillation vom Lösungsmittel befreit.

Daten in Tabelle 1.

**Tabellle 1:** Daten der in den Beispielen 1—7 erhaltenen Polyamine

| | Beispiele 1—7 | | | | | | |
|---|---|---|---|---|---|---|---|
| | 1 | 2 | 3 | 4 | 5 | 6 | 7 |
| Ausbeute [% d. Th.] | 99 | 99 | 99 | 100 | 89 | 84 | 71[6] |
| prim. Stickstoff [%][1] | 0,74 | 0,83 | 0,93 | 0,95 | 0,86 | 0,88 | 0,82 |
| ges. Stickstoff [%][2] | 2,45 | 2,44 | 2,57 | 2,48 | 2,51 | 2,50 | 2,56 |
| NH-Zahl [mg KOH/g][3] | 29,6 | 33,2 | 37,2 | 38,0 | 34,4 | 35,2 | 32,8 |
| NH-Zahl [mg KOH/g][4] | 29,1 | 32,4 | 36,7 | 38,0 | 33,7 | 34,4 | 33,6 |
| Wasser-Gehalt [%][5] | 0,25 | 0,06 | <0,05 | 0,18 | 0,11 | <0,05 | 0,1 |
| Viskosität [mPa.s/75°C] | 5 430 | 1 863 | 1 550 | 623 | 902 | 790 | 1 723 |

[1] Titration mit $HC10_4$
[2] nach Dumas
[3] rechnerisch aus[1]
[4] Acetanhydrid-Methode
[5] nach Karl Fischer
[6] weiteres Produkt durch Auswaschen der Säule mit z.B. $CH_3OH$.

**Beispiel 8**

Vorgelegt wird eine Mischung aus 1,3 1 Acetonitril, 200 g Wasser und 50 g basischem Aluminiumoxid (Aktivitätsstufe I, Fa. Woelm, D-344 Eschwege). Die Mischung wird unter intensivem Rühren zum Rückfluß erhitzt. Innerhalb 35 min werden 500 g eines polymers des NCO-Gehalts 6,6 % unter heftiger Kohlendioxid-Entwicklung zugegeben, wobei die Reaktionsmischung unmittelbar nach Beendigung der NCO-Prepolymerzugabe NCO-frei ist. Das suspendierte Aluminiumoxid wird heiß abfiltriert und das bei Raumtemperatur zweiphasige Substrat durch Destillation bei 20 mbar und dann 0,15 mbar, jeweils bei 100°C Bad-T. von den Lösungsmitteln befreit.

Daten in Tabelle 2.

Das NCO-Prepolymer wurde aus einem Polytetramethylenglykoletherdiol der OH-Zahl 112 und 2,4-Diisocyanatotoluol im Mol-Verhältnis 1:2 durch Vereinigung beider Komponenten bei Raumtemperatur und 4-stündiges Erhitzen auf 80°C hergestellt.

**Beispiel 9**

Vorgelegt wird eine Mischung aus 2 1 Acetonitril, 250 g Wasser und 50 g basischem Aluminiumoxid (Aktivitätsstufe I, Fa. Woelm, D-344, Eschwege). Die Mischung wird unter intensivem Rühren zum Rückfluß erhitzt. Innerhalb 60 min werden 500 g eines 40°C warmen NCO-Prepolymers mit einem NCO-Gehalt von 11,2 % zugegeben, wobei kräftige $CO_2$-Entwicklung zu beobachten ist. Unmittelbar nach Beendigung der Zugabe des NCO-Prepolymeren ist die Reaktionsmischung NCO-frei. Aufarbeitung erfolgt wie in Beispiel 8.

Daten in Tabelle 2.

Das verwendete NCO-prepolymer wurde aus einem linearen polypropylenglykol der OH-Zahl 265 und 2,4-Diisocyanatotoluol im Mol-Verhältnis 1:2 durch Vereinigung beider Komponenten bei Raumtemperatur und 4-stündiges Erhitzen auf 80°C hergestellt.

**Beispiel 10**

Vorgelegt wird eine Mischung aus 1,5 1 Aceton, 250 g Wasser und 75 g basischem Aluminiumoxid. Die Mischung wird unter intensivem Rühren zum Rückfluß erhitzt und dann binnen 45 min 500 g eines Prepolymers, das auf 50°C erwärmt wurde, mit einem NCO-Wert von 5,6 % zugegeben, wobei starke Kohlendioxid-Entwicklung auftritt. Unmittelbar nach Beendigung der Zugabe des NCO-Prepolymers ist die Reaktionsmischung NCO-frei. Aufarbeitung erfolgt wie in Beispiel 8.

Daten in Tabelle 2.

Das NCO-Prepolymer wurde aus einem linearen Polypropylenglykol der OH-Zahl 112 und einem ca. 1:2-Gemisch aus 4,4'-Diisocyanatodiphenylmethan und 2,4'-Diisocyanato-diphenylmethan im Molverhältnis 1:2 durch Vereinigung beider Komponenten bei Raumtemperatur und 4-stündiges Erhitzen auf 80°C hergestellt.

**Beispiel 11**

Vorgelegt wird eine Mischung aus 1,35 1 Dioxan, 150 g Wasser und 125 g brite-sorb® (vgl. Beispiel 4). Die Mischung wird unter intensivem Rühren auf 80°C erwärmt und innerhalb 90 min mit 750 g eines 50°C warmen NCOprepolymers mit dem NCO-Gehalt 3,3 % zugegeben. Es tritt starke Kohlendioxid-Entwicklung auf. Die Reaktionsmischung ist sofort nach Beendigung der Zugabe des NCOprepolymeren NCO-frei; aus ihr wird noch heiß der Katalysator abfiltriert. Weitere Aufarbeitung erfolgt wie in Beispiel 8.

Daten in Tabelle 2.

Das eingesetzte NCO-prepolymer wurde aus einem linearen Polypropylenglykol der OH-Zahl 56 und 2,4'-Diisocyanatodiphenylsulfid im Molverhältnis 1:2 durch Vereinigung beider Komponenten bei Raumtemperatur und 4-stündiges Erhitzen auf 80°C hergestellt.

**Beispiel 12**

Zu einer 95°C heißen Mischung aus 1,65 1 Dimethylformamid, 350 g Wasser und 125 g brite-sorb® werden innerhalb 30 min 1,4 1 einer Lösung von 700 g eines Trimerisats von 2,4-Diisocyanatotoluol (NCO-Wert 20,3 %, "Desmodur IL"® der BAYER AG) in 700 ml Dioxan zugegeben. Es wird intensiv gerührt. Die unmittelbar nach Beendigung der Zugabe des NCO-Addukts, die von starker Gasentwicklung begleitet ist, NCO-freie Reaktionsmischung wird wie in Beispiel 8 aufgearbeitet.

Daten in Tabelle 2.

**Beispiel 13**

Zu einer 90°C heißen Mischung aus 2,7 kg Dimethylformamid, 450 ml Wasser und 200 g basischem Aluminiumsilikat "brite-sorb®" (vgl. Beispiel 4) werden unter intensivem Rühren und starker Kohlendioxid-Entwicklung 900 g eines 50°C warmen NCO-prepolymers des NCO-Wertes 3,0 % in 60 min gegeben. Dieses NCO-prepolymer wurde aus einem polyester aus Adipinsäure, Ethylenglykol und Butandiol-1,4 (Molverhältnis Ethylenglykol:Butandiol-1,4 = 1:1) und 2,4-Diisocyanatotoluol im Molverhältnis 1:2 durch Zugabe von flüssigem polyester zu vorgelegtem, 80°C warmen polyisocyanat und anschließendem 3-stündigem Erhitzen des Gemisches auf 80°C erhalten. Aus der auf 60°C abgekühlten Reaktionsmischung wird der Katalysator abfiltriert, Wasser und DMF bei vermindertem Druck abdestilliert, mit 250 ml Toluol aufgenommen und erneut destilliert.

Daten in Tabelle 2.

**Beispiel 14**

Zu einer 90°C heißen Mischung aus 1,5 1 Dimethylformamid, 250 g Wasser und 100 g basischem Aluminiumsilikat "brite-sorb®" werden in 120 min 500 g eines 40°C wärmen NCO-prepolymers des NCO-Wertes 5,0 % unter intensivem Rühren zugegeben. Die 70°C heiße Reaktionsmischung, die sofort nach Zugabeende NCO-frei ist, wird zur Abtrennung des Katalysators filtriert. Das Solvens wird bei 20 mbar/100°C und dann 1 mbar/100°C abdestilliert.

Daten in Tabelle 2.

Das NCO-Prepolymer wird so hergestellt, daß 1,6-Diiso-cyanatohexan und ein lineares Polypropylenglykol der OH-Zahl 112 bei Raumtemperatur im NCO:OH-Verhältnis 6:1 zusammengegeben, 8 h auf 100°C erhitzt und dann das überschüssige monomere Diisocyanat mittels eines Dünnschichters bei vermindertem Druck abdestilliert wird.

**Tabellle 2:** Daten der in den Beispielen 8—14 hergestellten Polyamine

| | Beispiele 8—14 | | | | | | |
|---|---|---|---|---|---|---|---|
| | 8 | 9 | 10 | 11 | 12 | 13 | 14 |
| Ausbeute [%] | 99 | 99 | 99 | 99 | 99 | 99 | 99 |
| prim. Stickstoff [%][1] | 1,01 | 1,83 | 1,24 | 0,76 | 5,91 | 0,86 | 1,23 |
| ges. Stickstoff [%][2] | 4,50 | 8,36 | 4,00 | 2,28 | 16,12 | 2,49 | 3,46 |
| NH-Zahl [mg KOH/g][3] | 40,4 | 73,2 | 49,6 | 30,4 | 236,4 | 34,4 | 49,2 |
| NH-Zahl [mg KOH/g][4] | 40,7 | 72,9 | 50,0 | 30,5 | 238 | 35,3 | 50,3 |
| Wasser-Gehalt [%][5] | 0,23 | 0,14 | 0,34 | 0,08 | 0,11 | 0,05 | 0,17 |
| Viskosität [mPa.s][6] | 2 300 | 25 000 | 1 300 | 510 | —[7] | —[7] | 1 040 |

[1–5] s. Tabelle 1
[6] bei 75°C
[7] Harz

**Patentansprüche**

1. Verfahren zur Herstellung von aromatische und/oder aliphatische Aminogruppen aufweisenden primären Polyaminen durch Hydrolyse von freie Isocyanatgruppen aufweisenden Verbindungen in einem Schritt durch Vermischung von

a) aromatische und/oder aliphatische, freie NCO-Gruppen aufweisenden Verbindungen mit einem NCO-Gehalt zwischen 0,5 und 40 Gew.-%, bevorzugt 1,2 - 25 Gew.-%, besonders bevorzugt 1,5-15 Gew.-%, gegebenenfalls gelöst in einem NCO-inerten Lösungsmittel,
b) Wasser,
c) einer Base als Katalysator,
d) einem wassermischbaren Lösungsmittel,
und gegebenenfalls
e) 0,1 - 15 Gew.-%, bezogen auf a), mindestens einer, ein bis vier NCO-reaktive H-Atome aufweisende Gruppen enthaltenden Verbindung des Molekulargewichtsbereiches 32 - 2000, dadurch gekennzeichnet, daß der basische Katalysator c) eine sowohl in Wasser als auch in allen gängigen organischen Lösungsmitteln im wesentlichen unlösliche, organische oder anorganische Verbindung ist.

2) Verfahren gemäß Anspruch 1, dadurch gekennzeichnet, daß die sowohl in Wasser als auch in allen gängigen organischen Lösungsmitteln unlöslichen basischen Katalysatoren c) aus der Gruppe der unlöslichen Erdalkalicarbonate, unlöslichen Erdmetalloxide, unlöslichen Doppeloxide vom Spinell-Typ, Erdalkali und Erdmetallsilikaten oder aus organischen hochmolekularen Anionenaustauscherharzen stammen.

3) Verfahren nach Anspruch 1 und 2, dadurch gekennzeichnet, daß man als unlösliche basische Katalysatoren c) basisches Aluminiumoxid, basisches Magnesiumsilikat oder basische Ionenaustauscherharze verwendet.

4) Verfahren nach Ansprüchen 1 - 3 dadurch gekennzeichnet, daß man die Hydrolyse in Gegenwart von Wasser in mindestens der 10-fach stöchiometrischen Menge durchführt.

5) Verfahren gemäß Ansprüchen 1 - 4 dadurch gekennzeichnet, daß das wassermischbare Lösungsmittel ein oder mehrere, cyclische oder acyclische Carbonsäure-N,N-dialkylamid-, Lactam-, Tetraalkylharnstoff-, Sulfon-, Sulfoxid-, phosphorsäure-N,N-dialkylamid-, Nitril-, Keto- oder Ethergruppen aufweist und unter 250°C siedet.

6) Verfahren gemäß Ansprüchen 1 - 5, dadurch gekennzeichnet, daß man die Hydrolyse bei 50 - 165°C durchführt.

7) Verfahren nach Ansprüchen 1 - 6, dadurch gekennzeichnet, daß man als NCO-Gruppen aufweisende Verbindungen NCO-prepolymere mit einem Gehalt von 1,5-15 Gew.-% aromatisch gebundenen NCO-Gruppen auf Basis von höhermolekularen, di- oder trifunktionellen polyether-, Polyester-, Polycarbonat- und Polycaprolacton-Polyolen einsetzt.

8) Verfahren nach Ansprüchen 1 - 7, dadurch gekennzeichnet, daß die aromatisch gebundenen NCO-Gruppen an den aromatischen Ring einer Toluylen- oder einer Diphenylmethan-Struktur gebunden sind.

**Claims**

1. Process for the production of primary polyamines containing aromatic and/or aliphatic amino groups by the hydrolysis of compounds containing free isocyanate groups in one step by mixing

a) compounds containing aromatic and/or aliphatic free NCO groups and having an NCO content between 0.5 and 40% by weight, preferably 1.2 - 25% by weignt, particularly preferably 1.5 - 15% by weight, optionally dissolved in an NCO-inert solvent,

b) water,

c) a base as the catalyst,

d) a water-miscible solvent, and optionally

e) 0.1 - 15% by weight, based on a), of at least one compound which contains one to four groups containing NCO-reactive H atoms and has a molecular weight in the range 32 - 2,000,

characterised in that the basic catalyst c) is an organic or inorganic compound which is substantially insoluble both in water and in all customary organic solvents.

2. Process according to Claim 1, characterised in that the basic catalysts c) which are insoluble both in water and in all customary organic solvents emanate from the group comprising the insoluble alkaline earth carbonates, insoluble earth metal oxides, insoluble double oxides of the spinel type, alkaline earth and earth metal silicates or from organic high molecular weight anion exchanger resins.

3. Process according to Claim 1 and 2, characterised in that basic aluminium oxide, basic magnesium silicate or basic ion exchanger resins are used as the insoluble basic catalysts c).

4. Process according to Claims 1 - 3, characterised in that the hydrolysis is carried out in the presence of at least 10 times the stoichiometric quantity of water.

5. Process according to Claims 1 - 4, characterised in that the water-miscible solvent contains one or more cyclic or acyclic carboxylic acid N,N-dialkylamide, lactam, tetraalkyl urea, sulphone, sulphoxide, phosphoric acid N,N-dialkylamide, nitrile, keto or ether groups and boils at below 250°C.

6. Process according to Claims 1 - 5, characte ised in that the hydrolysis is carried out at 50 - 165°C.

7. Process according to Claims 1 - 6, characterised in that NCO prepolymers containing 1.5 - 15% by weight of aromatically bound NCO groups and based on relatively high molecular weight, dior trifunctional polyether, polyester, polycarbonate and polycaprolactone polyols are used as the compounds containing NCO groups.

8. Process according to Claims 1 - 7, characterised in that the aromatically bound NCO groups are bound to the aromatic ring of a toluylene or a diphenylmethane structure.

**Revendications**

1. Procédé de préparation de polyamines primaires contenant des groupes amino aromatiques et/ou aliphatiques par hydrolyse de composés contenant des groupes isocyanate libres en un seul stade opératoire par mélange de:

a) des composés aromatiques et/ou aliphatiques contenant des groupes NCO libres, à une teneur en NCO de 0,5 à 40% en poids, de préférence de 1,2 à 25% en poids et mieux encore de 1,5 à 15% en poids, éventuellement en solution dans un solvant inerte à l'égard des groupes NCO,

b) de l'eau,

c) une base qui sert de catalyseur,

d) un solvant miscible à l'eau, et le cas échéant,

e) 0,1 à 15% en poids, par rapport à a), d'au moins un composé contenant 1 à 4 groupes portant des atomes d'hydrogéne réactifs à l'égard des groupes NCO, de poids moléculaire 32 à 2000, caractérisé en ce que le catalyseur basique c) est un composé organique ou minéral essentiellement insoluble dans l'eau et dans tous les solvants organiques usuels.

2. Procédé selon la revendication 1, caractérisé en ce que les catalyseurs basiques c) insolubles dans l'eau et dans tous les solvants organiques usuels appartiennent au groupe des carbonates de métaux alcalino-terreux insolubles, des oxydes de métaux terreux insolubles, des oxydes doubles insolubles du type spinelle, des silicates de métaux alcalino-terreux et de métaux terreux ou des résines échangeuses d'anions organiques à haut poids moléculaire.

3. Procédé selon les revendications 1 et 2, caractérisé en ce que l'on utilise en tant que catalyseurs basiques insolubles c) l'alumine basique, un silicate de magnésium basique ou des résines échangeuses d'ions basiques.

4. Procédé selon les revendications 1 à 3, caractérisé en ce que l'on effectue l'hydrolyse en présence d'eau en quantité d'au moins 10 fois la quantité stoechiométrique.

5. Procédé selon les revendications 1 à 4, caractérisé en ce que le solvant miscible à l'eau contient un ou plusieurs groupes N,N-dialkylamide d'acide carboxylique cyclique ou acyclique, lactame, tétraalkylurée, sulfone, sulfoxyde, N,N-dialkylamide d'acide phosphorique, nitrile, céto ou éther et bout au-dessous de 250°C.

6. Procédé selon les revendications 1 à 5, caractérisé en ce que l'on effectue l'hydrolyse à une température de 50 à 165°C.

7. Procédé selon les revendications 1 à 6, caractérisé en ce que l'on met en oeuvre en tant que composés portant des groupes NCO, des prépolyméres à groupes NCO contenant 1,5 à 15% en poids de groupes NCO à liaisons aromatiques à base de polyéther-, polyester-, polycarbonate- et polycaprolactone-polyols di- ou tri-fonctionnels à haut poids moléculaire.

8. Procédé selon les revendications 1 à 7, caractérisé en ce que les groupes NCO à liaisons aromatiques sont fixés sur le noyau aromatique d'une structure toluylène ou d'une structure diphénylméthane.